(19)

Europäisches
Patentamt
European
Patent Office
Office européen
des brevets

(11)  EP 2 779 521 B1

## (12) EUROPEAN PATENT SPECIFICATION

(45) Date of publication and mention
of the grant of the patent:
**21.09.2016  Bulletin 2016/38**

(51) Int Cl.:
***H04L 9/00*** *(2006.01)*

(21) Application number: **14158566.1**

(22) Date of filing: **10.03.2014**

(54) **A method and a device for fault-resistant exponentiation in cryptographic systems**

Verfahren und Vorrichtung zur fehlerbeständigen Potenzierung in kryptografischen Systemen

Procédé et dispositif pour l'exponentiation fiable dans des systèmes cryptographiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2013 EP 13305266**

(43) Date of publication of application:
**17.09.2014  Bulletin 2014/38**

(73) Proprietor: **Thomson Licensing
92130 Issy-les-Moulineaux (FR)**

(72) Inventor: **Joye, Marc
35576 Cesson Sévigné (FR)**

(74) Representative: **Ståhl, Björn Niclas
Technicolor
1, rue Jeanne d'Arc
92443 Issy-les-Moulineaux (FR)**

(56) References cited:
**FR-A1- 2 942 560     US-A1- 2010 232 603**

• **GIRAUD C: "An RSA Implementation Resistant to
Fault Attacks and to Simple Power Analysis",
IEEE TRANSACTIONS ON COMPUTERS, IEEE
SERVICE CENTER, LOS ALAMITOS, CA, US, vol.
55, no. 9, 1 September 2006 (2006-09-01), pages
1116-1120, XP002460785, ISSN: 0018-9340, DOI:
10.1109/TC.2006.135**

• **COLIN D WALTER ED - ORR DUNKELMAN: "A
Duality in Space Usage between Left-to-Right and
Right-to-Left Exponentiation", 1 January 2012
(2012-01-01), TOPICS IN CRYPTOLOGY CT-RSA
2012, SPRINGER BERLIN HEIDELBERG, BERLIN,
HEIDELBERG, PAGE(S) 84 - 97, XP019173575,
ISBN: 978-3-642-27953-9 * the whole document ***

• **DAVID VIGILANT ED - ELISABETH OSWALD ET
AL: "RSA with CRT: A New Cost-Effective
Solution to Thwart Fault Attacks", 10 August 2008
(2008-08-10), CRYPTOGRAPHIC HARDWARE
AND EMBEDDED SYSTEMS Â CHES 2008;
[LECTURE NOTES IN COMPUTER SCIENCE],
SPRINGER BERLIN HEIDELBERG, BERLIN,
HEIDELBERG, PAGE(S) 130 - 145, XP047029799,
ISBN: 978-3-540-85052-6 * the whole document ***

• **CHONG HEE KIM ET AL: "Fault Attacks for CRT
Based RSA: New Attacks, New Results, and New
Countermeasures", 9 May 2007 (2007-05-09),
INFORMATION SECURITY THEORY AND
PRACTICES. SMART CARDS, MOBILE AND
UBIQUITOUS COMPUTING SYSTEMS;
[LECTURE NOTES IN COMPUTER
SCIENCE;;LNCS], SPRINGER BERLIN
HEIDELBERG, BERLIN, HEIDELBERG, PAGE(S)
215 - 228, XP019079367, ISBN: 978-3-540-72353-0
* the whole document ***

• **Arnaud Boscher ET AL: "Fault Resistant RSA
Signatures: Chinese Remaindering in Both
Directions", , 25 January 2010 (2010-01-25),
XP55021010, Retrieved from the Internet:
URL:http://eprint.iacr.org/2010/038.pdf[retrieved
on 2012-03-06]**

**Description**

TECHNICAL FIELD

The present invention relates generally to cryptography, and in particular to a countermeasure against fault attacks in RSA-based or discrete-log based cryptography.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Throughout the application, the RSA cryptosystem will be used as an illustrative, non-limitative example, but it will be appreciated that the problem and its solution can for example be readily extended to cryptosystems based on discrete logarithms like for example the Diffie-Hellman key exchange and the ElGamal encryption scheme.

It is well known that the RSA cryptosystem, particularly when implemented using Chinese remaindering, is sensitive to fault attacks. This holds true for plain RSA but also for versions using a provable secure padding.

One solution is presented by Christophe Giraud in "An RSA Implementation Resistant to Fault Attacks and to Simple Power Analysis" IEEE Transactions on Computers, vol. 55, no. 9, pages 1116-1120. The implementation detects attacks by having in each iteration a temporary couple that is used to calculate the temporary couple in the next iteration and checking the coherence between the last temporary results.

An efficient way to preclude fault attacks was proposed by Vigilant [see RSA with CRT: A new cost-effective solution to thwart fault attacks. In E. Oswald and P. Rohatgi, editors, Cryptographic Hardware and Embedded Systems - CHES 2008, volume 5154 of Lecture Notes in Computer Science, pages 130-145. Springer, 2008].

Vigilant's method works as follows. On input $x$ and $d$, one has to compute $S = x^d \bmod N$ (or $x^d \bmod \{p, q\}$ in CRT mode), where the modulus $N$ is a product of two chosen prime number $p$ and $q$.

    1. Choose a random integer $r$ co-prime to $N$;
    2. Compute $\beta = N(N^{-1} \bmod r^2)$ and $\alpha = 1 - \beta \bmod Nr^2$;
    3. Compute $\hat{x} = \alpha x + \beta(1 + r) \bmod Nr^2$ and $\hat{N} = Nr^2$;
    4. Compute $S_r = \hat{x}^d \bmod \hat{N}$;
    5. If $S_r \equiv 1 + dr(\bmod r^2)$ then return $S = S_r \bmod N$; otherwise return an error message.

Vigilant's countermeasure works well to some extent, but it suffers from drawbacks: it involves the computation of a modular inverse (in step 2) and it extends the modulus (which is unavoidable) in a random manner. Since the modular inverse and the extension of the modulus depend on the random number, they are different from one exponentiation to the next.

It will thus be appreciated that it is desired to have a countermeasure that does not involve the computation of the modular inverse as Vigilant does. The present invention provides a countermeasure that overcomes at least some of the disadvantages of Vigilant's countermeasure.

The reader is further directed to the paper "Fault Resistant RSA Signatures: Chinese Remaindering in Both Directions" by A. Boscher, H. Handschuh and E. Trichina, published on January 25, 2010 in the IACR Cryptology ePrint Archive. This disclosure proposes new efficient methods with associated security proofs in two different models. In particular, step 3 of Algorithm 3 disclosed on page 5 is of relevance, wherein the signature S is computed as:

$$S \leftarrow ((S_p - S_q) * i_q \bmod p) * q + S_q.$$

SUMMARY OF INVENTION

In a first aspect, the invention is directed to a method of performing fault-resistant exponentiation using an input $x$, a secret exponent $d$ and a modulus $N$ to obtain a result $S$. A processor having a predetermined value $r$: receives the input $x$; computes an extended base $\hat{x} = x + N \cdot [i_N(1 + ar - x) \bmod t]$, wherein $i_N = N^{-1} \bmod t$ $t$ is a modular inverse, $t$ is co-prime to the modulus $N$ and $t = br^2$, where $r$ and $b$ are integers; computes an intermediate result $S_r$ using modular exponentiation involving the secret exponent $d$, the extended base $\hat{x}$ and an extended modulus $\hat{N}$, wherein the extended modulus $\hat{N}$ is computed using the modulus $N$ and the predetermined value $r$ and is independent of the random value $a$; verifies that $S_r$ satifies an equation involving the random value $a$ calculated modulus a multiple of the predetermined value $r$; and returns the result $S = S_r \bmod N$ if and only if the verifying is successful.

In a first embodiment, the processor further chooses the random element $a$.

In a second embodiment, the random value $a \in \mathbb{Z}/r\mathbb{Z}$.

In a third embodiment, the processor further computes the extended modulus $\hat{N} = Nt$.

In a fourth embodiment, the intermediate value $S_r$ is calculated as $S_r = \hat{x}^d \bmod \hat{N}$.

In a fifth embodiment, the equation that the intermediate value $S_r$ is to satisfy is $S_r \equiv 1 + dar(\bmod r^2)$.

In a second aspect, the invention is directed to a device for performing exponentiation using an input $x$, a secret exponent $d$ and a modulus $N$ to obtain a result $S$, the exponentiation being resistant to fault attacks. The device comprises: an interface configured to receive the input $x$ and to output the result S; and a processor configured to: compute an extended base $\hat{x} = x + N \cdot [i_N(1 + ar - x) \bmod t]$, wherein $i_N = N^{-1} \bmod t$ is a modular inverse, $t$ is co-prime to the modulus $N$ and $t = br^2$, where $r$ and $b$ are integers; compute an intermediate result $S_r$ using modular exponentiation involving the secret exponent d, an extended base $\hat{x}$ and an extended modulus $\hat{N}$, wherein the extended modulus $\hat{N}$ is computed using the modulus $N$ and a predetermined value $r$ and is independent of the random value $a$, wherein the processor is configured to use the predetermined value $r$ for a plurality of exponentiations; verify that $S_r$ satifies an equation involving the random value $a$ calculated modulus a multiple of the predetermined value $r$; and send the result $S = S_r \bmod N$ to the interface (110) if and only if the verifying is successful.

In a first embodiment, the processor is further configured to choose the random element $a$.

In a second embodiment, the random value $a \in \mathbb{Z}/r\mathbb{Z}$.

In a third embodiment, the processor is further configured to compute the extended modulus $\hat{N} = Nt$.

In a fourth embodiment, the processor is configured to calculate the intermediate value $S_r$ as $S_r = \hat{x}^d \bmod \hat{N}$.

In a fifth embodiment, the equation that the intermediate value $S_r$ is to satisfy is $S_r \equiv 1 + dar \pmod{r^2}$.

In a third aspect, the invention is directed to a non-transitory computer medium storing instructions that, when executed by a processor, perform the method of the first aspect.

BRIEF DESCRIPTION OF DRAWINGS

Preferred features of the present invention will now be described, by way of non-limiting example, with reference to the accompanying drawings, in which:

> Figure 1 illustrates a cryptographic device with a countermeasure against fault attacks according to a preferred embodiment of the invention; and
> Figure 2 illustrates a method for fault-resistant exponentiation according to a preferred embodiment of the invention.

DESCRIPTION OF EMBODIMENTS

It will be appreciated that, given a random integer $r$, Vigilant's countermeasure transforms input base $x$ into extended base $\hat{x}$ such that

$$\begin{cases} \hat{x} \equiv x \pmod N \\ \hat{x} \equiv 1 + r \pmod{r^2} \end{cases}$$

As already mentioned, apart from the computation of the modular inverse in step 2, a further drawback is that the extended modulus $Nr^2$ is constructed at random, which can contradict its efficient use. Indeed, some exponentiation algorithms impose conditions on the modulus. As a consequence, the extended modulus must then usually be further enlarged to comply with these conditions.

A main idea of the present invention is thus to construct a "random" element modulo $r^2$ for a *fixed* element $r$ (and thus a fixed extended modulus $\hat{N}$). In other words, the extended modulus is now predetermined for a chosen, fixed $r$. This way, both the computation of the modular inverse can be avoided (it can be calculated once and for all) and the extended modulus can be selected so as to comply with the conditions imposed on the modulus. For security, randomness is needed. In Vigilant's method, randomness is introduced by the choice of $r$. Note that in the present invention, since r is fixed, randomness is needed elsewhere; this is why the extended base modulo $r^2$ (i.e., $\hat{x} \bmod r^2$) is chosen as a random element, as opposed to Vigilant's method. Indeed, if r were fixed in Vigilant's method then so would be $\hat{x} \bmod r^2$, namely $\hat{x} \equiv 1 + r \pmod{r^2}$.

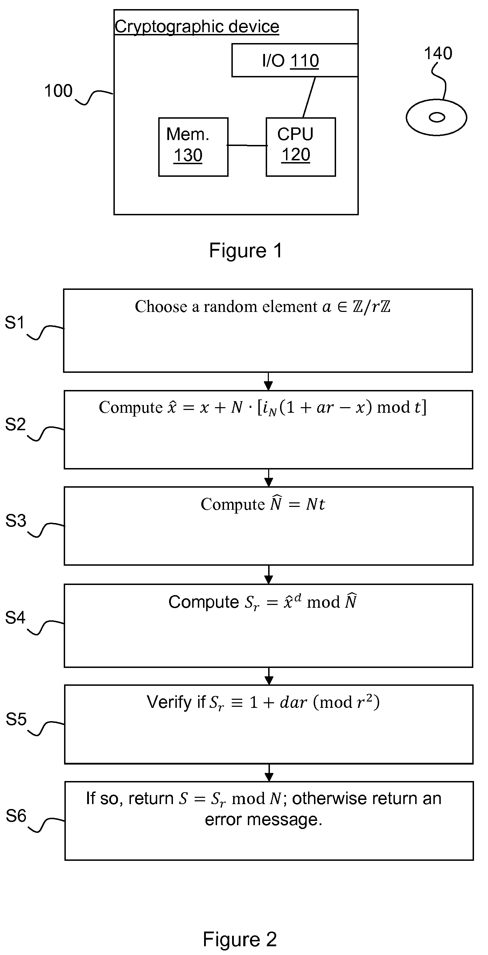

Figure 1 illustrates a cryptographic device 100 with a countermeasure against fault attacks according to a preferred embodiment of the invention. The device 100 comprises at least one interface unit 110 configured for communication, at least one processor ("processor") 120 and at least one memory 130 configured for storing data, such as accumulators and intermediary calculation results. The Figure also shows a first computer program product (non-transitory storage medium) 140 such as a CD-ROM or a DVD comprises stored instructions that, when executed by the processor 120, performs exponentiation according to the invention.

As for the exponentiation algorithm (which, it is again pointed out, is compatible with RSA as a non-limitative example), it is first to be noted and easily verified that $(1 + r)$ generates the subgroup $G_1 = \{x \in \mathbb{Z}/r^2\mathbb{Z} \mid x \equiv 1$ The elements of $G_1$ are $1 + \alpha \cdot r$ with $\alpha \in \{0, ..., r - 1\}$.

As already mentioned, the preferred embodiment uses an a priori selected integer $r$. In order to provide the countermeasure, a random element $a \in \{0, ..., r - 1\}$ is chosen and the extended base $\hat{x}$ is formed such that

$$\begin{cases} \hat{x} \equiv x \pmod N \\ \hat{x} \equiv 1 + a \cdot r \pmod{r^2} \end{cases}$$

This can easily be generalized to an a priori selected integer $t = br^2$ (where $b$ is an integer > 0 that can be squarefree or not).

For the a priori selected integer $t = br^2$ co-prime to $N$, the processor 110 obtains or computes a modular inverse $i_N = N^{-1} \bmod t$.

The device 100 is then ready to perform modular exponentiation resistant to fault attacks, using an input $x$ received via the interface 110 and a (secret) exponent $d$, as follows and as illustrated in Figure 2:

S1. Choose a random element $a \in \mathbb{Z}/r\mathbb{Z}$;

S2. Compute $\hat{x} = x + N \cdot [i_N(1 + ar - x) \bmod t]$;

S3. Compute $\hat{N} = Nt$;

S4. Compute $S_r = \hat{x}^d \bmod \hat{N}$;

S5. Verify if $S_r \equiv 1 + dar \pmod{r^2}$.

S6. If and only if so, return $S = S_r \bmod N$ via the interface 110; otherwise return an error message.

It is worth noting that since $t$ is fixed, the value of $i_N$ can be precomputed. No modular inverse is therefore required for the evaluation of $\hat{x}$.

As will be shown, the method of the present invention nicely combines with existing implementations. For example, Quisquater's algorithm [see U.S. Patent No. 5,166,978, Encoding system according to the so-called RSA method, by means of a microcontroller and arrangement implementing this system] - used in all Philips's (now NXP) co-processors - requires a modulus with its $c$ most significant bits equal to 1. This can be achieved by multiplying modulus $N$ by some appropriately chosen factor $\delta$ [see M. Joye. On Quisquater's multiplication algorithm. In D. Naccache, editor, Cryptography and Security: From Theory to Applications, volume 6805 of Lecture Notes in Computer Science, pages 3-7. Springer, 2012].

Applied to the proposed method, it is for example possible to set $t = \delta$. In this particular case, it is worth noting that the countermeasure comes virtually for free (as no extra working memory is required and the overall cost is very low).

It will thus be appreciated that the present invention can provide a countermeasure that does not require inversion (apart from the one that can be pre-computed), which is the main bottleneck in Vigilant's countermeasure and which means that the present method can achieve better performance speed-wise and reduced requirements for working memory if the same processors and sensible implementations are used. Further, the proposed countermeasure nicely combines with certain modular multiplication algorithms that already extend the modulus.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of performing modular exponentiation using an input x, a secret exponent d and a modulus N to obtain a result S, the exponentiation being resistant to fault attacks, the method including at least in a processor (120) of a device (100), the processor having a predetermined value r:

   - receiving the input x;
   - computing (S2) an extended base $\hat{x}$=x+N·[i_N (1+ar-x) mod t], wherein i_N=N^(-1) mod t is a modular inverse, t is co-prime to the modulus N and t = br$^2$, where r and b are integers, and a is a random value;
   - computing (S4) an intermediate result S_r using modular exponentiation involving the secret exponent d, the extended base $\hat{x}$ and an extended modulus $\hat{N}$, wherein the extended modulus $\hat{N}$ is computed using the modulus N and the predetermined value r and is independent of the random value a;
   - verifying that S_r satifies an equation involving the random value a calculated modulo a multiple of the predetermined value r; and
   - return (S6) the result S=S_r mod N if and only if the verifying is successful.

2. The method of claim 1, further comprising choosing (S1) the random element a.

3. The method of claim 1, wherein the random value $a \in \mathbb{Z}/r\mathbb{Z}$.

4. The method of claim 1, further comprising computing (S3) the extended modulus $\hat{N}$=Nt.

5. The method of claim 1, wherein the intermediate value S_r is calculated as S_r=$\hat{x}$^d mod $\hat{N}$.

6. The method of claim 1, wherein the equation that the intermediate value S_r is to satisfy is S_r≡1+dar(mod r^2).

7. A device (100) for performing exponentiation using an input x, a secret exponent d and a modulus N to obtain a result S, the exponentiation being resistant to fault attacks, the device (100) comprising:

   - an interface (110) configured to receive the input x and to output the result S; and
   - a processor (120) configured to:

      - compute the extended base $\hat{x}$=x+N·[i_N (1+ar-x) mod t], wherein i_N=N^(-1) mod t is a modular inverse, t is co-prime to the modulus N and $t = br^2$, where r and b are integers, and a is a random value;
- compute an intermediate result S_r using modular exponentiation involving the secret exponent d, the extended base x^ and an extended modulus $\hat{N}$, wherein the extended modulus $\hat{N}$ is computed using the modulus N and a predetermined value r and is independent of the random value a, wherein the processor is configured to use the predetermined value r for a plurality of exponentiations;
- verify that S_r satifies an equation involving the random value a calculated modulo a multiple of the predetermined value r; and
- send the result S=S_r mod N to the interface (110) if and only if the verifying is successful.

8. The device of claim 7, wherein the processor (120) is further configured to choose the random element a.

9. The device of claim 7, wherein the random value a∈Z/rZ.

10. The device of claim 7, wherein the processor (120) is further configured to compute the extended modulus $\hat{N}$ =Nt.

11. The device of claim 7, wherein the processor is configured to calculate the intermediate value S_r as S_r=xd mod N.

12. The device of claim 7, wherein the equation that the intermediate value S_r is to satisfy is S_r=1+dar(mod r^2).

13. A non-transitory computer medium (140) storing instructions that, when executed by a processor, perform the method of any one of claims 1 to 6.

**Patentansprüche**

1. Verfahren zum Ausführen einer modularen Potenzierung unter Verwendung einer Eingabe x, eines geheimen Exponenten d und eines Moduls N, um ein Ergebnis S zu erhalten, wobei die Potenzierung immun gegen Fehlerangriffe ist, wobei das Verfahren in mindestens einem Prozessor (120) einer Vorrichtung (100), wobei der Prozessor einen vorgegebenen Wert r aufweist, Folgendes enthält:

   - Empfangen der Eingabe x;

   - Berechnen (S2) einer erweiterten Basis $\hat{x}$ = = x + N · [i_N (1 + ar - x) mod t], wobei i_N = $\hat{N}$ (-1) mod t eine modulare Inverse ist, t eine teilerfremde Zahl zu dem Modul N ist und $t = br^2$ ist, wobei r und b ganze Zahlen sind, und wobei a ein Zufallswert ist;
   - Berechnen (S4) eines Zwischenergebnisses S_r unter Verwendung einer modularen Potenzierung, die den geheimen Exponenten d, die erweiterte Basis $\hat{x}$ und einen erweiterten Modul $\hat{N}$ umfasst, wobei der erweiterte Modul $\hat{N}$ unter Verwendung des Moduls N und des vorgegebenen Werts r berechnet wird und unabhängig von dem Zufallswert a ist;
   - Überprüfen, dass S_r eine Gleichung erfüllt, die den Zufallswert a umfasst, der modulo eines Vielfachen des vorgegebenen Werts r berechnet wurde; und
   - Zurückgeben (S6) des Ergebnisses S = S_r mod N genau dann, wenn die Überprüfung erfolgreich ist.

2. Verfahren nach Anspruch 1, das ferner das Wählen (S1) des Zufallselements a umfasst.

3. Verfahren nach Anspruch 1, wobei der Zufallswert a ∈ Z/rZ ist.

4. Verfahren nach Anspruch 1, das ferner das Berechnen (S3) des erweiterten Moduls $\hat{N}$ = Nt umfasst.

5. Verfahren nach Anspruch 1, wobei der Zwischenwert S_r als S_r = $\hat{x}$ ^ d mod $\hat{N}$ berechnet wird.

6. Verfahren nach Anspruch 1, wobei die Gleichung, die der Zwischenwert S_r erfüllen soll, S_r = 1 + dar(mod r^2) ist.

7. Vorrichtung (100) zum Ausführen einer Potenzierung unter Verwendung einer Eingabe x, eines geheimen Exponenten d und eines Moduls N, um ein Ergebnis S zu erhalten, wobei die Potenzierung immun gegen Fehlerangriffe ist, wobei die Vorrichtung (100) umfasst:

   - eine Schnittstelle (110), die dafür konfiguriert ist, die Eingabe x zu empfangen und das Ergebnis S auszugeben; und
   - einen Prozessor (120), der konfiguriert ist zum:

      - Berechnen der erweiterten Basis $\hat{x}$ = = x + N · [i_N (1 + ar - x) mod t], wobei i_N = N^(-1) mod t eine modulare Inverse ist, t eine teilerfremde Zahl zu dem Modul N ist und t = br$^2$ ist, wobei r und b ganze Zahlen sind, und wobei a ein Zufallswert ist;
- Berechnen eines Zwischenergebnisses S_r unter Verwendung einer modularen Potenzierung, die den geheimen Exponenten d, die erweiterte Basis x$^\wedge$ und einen erweiterten Modul N$^\wedge$ umfasst, wobei der erweiterte Modul N unter Verwendung des Moduls N und des vorgegebenen Werts r berechnet wird und unabhängig von dem Zufallswert a ist, wobei der Prozessor zum Verwenden des vorgegebenen Werts r für mehrere Potenzierungen konfiguriert ist;
- Überprüfen, dass S_r eine Gleichung erfüllt, die den Zufallswert a umfasst, der modulo eines Vielfachen des vorgegebenen Werts r berechnet wurde; und
- Senden des Ergebnisses S = S_r mod N an die Schnittstelle (110) genau dann, wenn die Überprüfung erfolgreich ist.

**8.** Vorrichtung nach Anspruch 7, wobei der Prozessor (120) ferner zum Wählen des Zufallselements a konfiguriert ist.

**9.** Vorrichtung nach Anspruch 7, wobei der Zufallswert a $\in$ Z/rZ ist.

**10.** Vorrichtung nach Anspruch 7, wobei der Prozessor (120) ferner zum Berechnen des erweiterten Moduls N$^\wedge$ = Nt konfiguriert ist.

**11.** Vorrichtung nach Anspruch 7, wobei der Prozessor zum Berechnen des Zwischenwerts S_r als S_r = x^d mod N^ konfiguriert ist.

**12.** Vorrichtung nach Anspruch 7, wobei die Gleichung, die der Zwischenwert S_r erfüllen soll, S_r = 1 + dar(mod r$^\wedge$2) ist.

**13.** Nichttemporäres Computermedium (140), auf dem Anweisungen gespeichert sind, die, wenn sie durch einen Prozessor ausgeführt werden, das Verfahren nach einem der Ansprüche 1 bis 6 ausführen.

**Revendications**

**1.** Procédé permettant d'effectuer une exponentiation modulaire à l'aide d'une entrée x, d'un exposant secret d et d'un module N pour obtenir un résultat S, l'exponentiation étant résistante aux attaques par faute, le procédé comprenant au moins un processeur (120) d'un dispositif (100), le processeur ayant une valeur prédéterminée r :

- recevant l'entrée x ;
- calculant (S2) une base étendue x$^\wedge$=x+N [i_N (1 +ar-x) mod t], où i_N=N^(-1) mod t est un inverse modulaire, t est premier avec le module N et t = br$^2$, où r et b sont des entiers et a est une valeur aléatoire ;
- calculant (S4) un résultat intermédiaire S_r à l'aide d'une exponentiation modulaire impliquant l'exposant secret d, la base étendue x$^\wedge$ et un module étendu N$^\wedge$, où le module étendu N$^\wedge$ est calculé à l'aide du module N et de la valeur prédéterminée r et est indépendant de la valeur aléatoire a ;
- vérifiant si S_r satisfait à une équation comprenant la valeur aléatoire a calculée modulo un multiple de la valeur r prédéterminée, et
- renvoyant (S6) le résultat S=S_r mod N si et uniquement si la vérification a réussi.

**2.** Procédé selon la revendication 1, comprenant en outre la sélection (S1) de l'élément aléatoire a.

**3.** Procédé selon la revendication 1, dans lequel la valeur aléatoire a $\in$Z/rZ.

**4.** Procédé selon la revendication 1, comprenant en outre le calcul (S3) du module étendu N$^\wedge$ =Nt.

**5.** Procédé selon la revendication 1, dans lequel la valeur intermédiaire S_r est calculée comme S_r=x$^\wedge$d mod N$^\wedge$.

**6.** Procédé selon la revendication 1, dans lequel l'équation à laquelle la valeur intermédiaire S_r doit satisfaire est S_r=1 +dar(mod r^2).

**7.** Dispositif (100) permettant d'effectuer une exponentiation à l'aide d'une entrée x, d'un exposant secret d et d'un module N, de sorte à obtenir un résultat S, l'exponentiation étant résistante aux attaques par faute, le dispositif (100) comprenant :

- une interface (110) configurée pour recevoir l'entrée x et pour sortir le résultat S ; et
- un processeur (120) configuré pour :

- calculer la base étendue x^=x+N[i_N

(1+ar-x) mod t], où i_N=N^(-1) mod t est un inverse modulaire, t est premier avec le module N et t= br$^2$, où r et b sont des entiers et a est une valeur aléatoire ;

- calculer un résultat intermédiaire S_r à l'aide d'une exponentiation modulaire impliquant l'exposant secret d, la base étendue x^ et un module étendu N^, où le module étendu N^ est calculé à l'aide du module N et d'une valeur prédéterminée r et est indépendant de la valeur aléatoire a, où le processeur est configuré pour utiliser la valeur prédéterminée r pour une pluralité d'exponentiations ,
- vérifier que S_r satisfait à une équation comprenant la valeur aléatoire a calculée modulo un multiple de la valeur prédéterminée r, et
- envoyer le résultat S=S_r mod N à l'interface (110) si et uniquement si la vérification a réussi.

8. Dispositif selon la revendication 7, dans lequel le processeur (120) est en outre configuré pour sélectionner l'élément aléatoire a.

9. Dispositif selon la revendication 7, dans lequel la valeur aléatoire a∈Z/rZ.

10. Dispositif selon la revendication 7, dans lequel le processeur (120) est en outre configuré pour calculer le module étendu N^=Nt.

11. Dispositif selon la revendication 7, dans lequel le processeur est configuré pour calculer la valeur intermédiaire S_r comme S_r=x^d mod N^.

12. Dispositif selon la revendication 7, dans lequel l'équation à laquelle la valeur intermédiaire S_r doit satisfaire est S_r=1 +dar(mod r^2).

13. Support sur ordinateur non transitoire (140) stockant des instructions qui, lorsqu'elles sont exécutées par un processeur, effectuent le procédé selon l'une des revendications 1 à 6.

Figure 1

S1 — Choose a random element $a \in \mathbb{Z}/r\mathbb{Z}$

S2 — Compute $\hat{x} = x + N \cdot [i_N(1 + ar - x) \bmod t]$

S3 — Compute $\widehat{N} = Nt$

S4 — Compute $S_r = \hat{x}^d \bmod \widehat{N}$

S5 — Verify if $S_r \equiv 1 + dar \pmod{r^2}$

S6 — If so, return $S = S_r \bmod N$; otherwise return an error message.

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5166978 A

**Non-patent literature cited in the description**

- **CHRISTOPHE GIRAUD.** An RSA Implementation Resistant to Fault Attacks and to Simple Power Analysis. *IEEE Transactions on Computers,* vol. 55 (9), 1116-1120
- Cryptographic Hardware and Embedded Systems - CHES 2008. Springer, 2008, vol. 5154, 130-145
- **A. BOSCHER ; H. HANDSCHUH ; E. TRICHINA.** Fault Resistant RSA Signatures: Chinese Remaindering in Both Directions. *the IACR Cryptology ePrint Archive,* 25 January 2010
- On Quisquater's multiplication algorithm. **M. JOYE.** Cryptography and Security: From Theory to Applications, volume 6805 of Lecture Notes in Computer Science. Springer, 2012, 3-7